# EUROPÄISCHE PATENTSCHRIFT

(11) **EP 4 021 147 B1**
(45) Veröffentlichungstag und Bekanntmachung des Hinweises auf die Patenterteilung: **21.01.2026**
(21) Anmeldenummer: 21211553.9
(22) Anmeldetag: 01.12.2021
(51) Int. Cl.: H05B 6/14, H05B 6/36, B23P 11/02

(54) **INDUKTIONSHEIZVORRICHTUNG, HÜLLENELEMENT UND VERFAHREN ZU EINEM VERSCHLEISSSCHUTZ EINES MAGNETFLUSSLEITELEMENTS DURCH DAS HÜLLENELEMENT**
INDUCTION HEATING DEVICE, CASING ELEMENT AND METHOD FOR PREVENTING WEAR OF A MAGNETIC FLUX CONDUCTING ELEMENT USING THE CASING ELEMENT
DISPOSITIF DE CHAUFFAGE PAR INDUCTION, ÉLÉMENT ENVELOPPE ET PROCÉDÉ DE PROTECTION CONTRE L'USURE D'UN ÉLÉMENT DE GUIDAGE DE FLUX MAGNÉTIQUE PAR L'ÉLÉMENT ENVELOPPE

(30) Priorität: 23.12.2020 DE 102020134800
(43) Veröffentlichungstag der Anmeldung: 29.06.2022
(73) Patentinhaber: E. Zoller GmbH & Co. KG Einstell- und Messgeräte, 74385 Pleidelsheim (DE)
(72) Erfinder: Zoller, Alexander, 74385 Pleidelsheim (DE); Pfau, Christian, 74379 Ingersheim (DE)
(74) Vertreter: Daub, Thomas

(56) Entgegenhaltungen:
- DE-A1- 102008 045 781
- DE-A1- 102019 108 605
- US-A1- 2008 277 386

## Beschreibung

### Stand der Technik

Die Erfindung betrifft eine Induktionsheizvorrichtung nach dem Oberbegriff des Anspruchs 1 und ein Verfahren nach dem Anspruch 12.

In der deutschen Patentanmeldung mit der Anmeldenummer 10 2020 129 700 sowie aus der DE 10 2008 045 781 A1 und der US 2008/277386 A1 sind bereits Induktionsheizvorrichtungen für ein Ein- und/oder ein Ausschrumpfen von Werkzeugen in und/oder aus einer Werkzeugaufnahme, mit einer, zumindest eine Induktionsspule umfassenden Induktionsheizeinheit, welche dazu vorgesehen ist, zumindest einen Teil einer in einem Aufnahmebereich der Induktionsheizeinheit angeordneten Werkzeugaufnahme bei einem Ein- und/oder Ausschrumpfvorgang durch ein Erhitzen aufzuweiten und mit zumindest einer Magnetflussleiteinheit zur Leitung eines durch die Induktionsspule erzeugten Magnetflusses, welche zumindest ein zumindest zu einem Großteil aus einem Ferritwerkstoff ausgebildetes Magnetflussleitelement aufweist, vorgeschlagen worden. Bei derartigen und vergleichbaren Induktionsheizvorrichtungen können die Magnetflussleitelemente an/auf Werkzeugen und/oder Werkzeugaufnahmen anliegen/aufliegen, teilweise nur mit schmalen Kantenbereichen oder Bünden. Wenn die Induktionsheizeinheiten dann z.B. einen manuell bedienbaren Modus aufweisen, dann ist eine Kraft, mit der die Magnetflussleitelemente an/auf dem Werkzeug/der Werkzeugaufnahme anschlagen/aufschlagen, abhängig von dem Bediener und kann somit relativ hoch werden.

Die Aufgabe der Erfindung besteht insbesondere darin, eine gattungsgemäße Vorrichtung mit vorteilhaften Eigenschaften hinsichtlich einer Lebensdauer bereitzustellen. Die Aufgabe wird erfindungsgemäß durch die Merkmale der Patentansprüche 1 und 12 gelöst, während vorteilhafte Ausgestaltungen und Weiterbildungen der Erfindung den Unteransprüchen entnommen werden können.

### Vorteile der Erfindung

Die Erfindung geht aus von einer Induktionsheizvorrichtung für ein Ein- und/oder ein Ausschrumpfen von Werkzeugen in und/oder aus einer Werkzeugaufnahme, mit einer, zumindest eine Induktionsspule umfassenden Induktionsheizeinheit, welche dazu vorgesehen ist, zumindest einen Teil einer in einem Aufnahmebereich der Induktionsheizeinheit angeordneten Werkzeugaufnahme bei einem Ein- und/oder Ausschrumpfvorgang durch ein Erhitzen aufzuweiten und mit zumindest einer Magnetflussleiteinheit zur Leitung eines durch die Induktionsspule erzeugten Magnetflusses, welche zumindest ein, insbesondere eine Mehrzahl an, vorzugsweise relativ zu dem Aufnahmebereich beweglich gelagertes, und zumindest zu einem Großteil aus einem Ferritwerkstoff ausgebildetes Magnetflussleitelement aufweist, und mittels welcher insbesondere eine Größe und/oder eine Form einer Öffnung des Aufnahmebereichs und/oder einer Öffnung der Magnetflussleiteinheit variierbar ist.

Es wird vorgeschlagen, dass die Induktionsheizvorrichtung ein Hüllenelement aufweist, welches an dem Magnetflussleitelement angeordnet ist und welches das Magnetflussleitelement auf zumindest einer Seite des Magnetflussleitelements abdeckt, welche in zumindest einem Betriebszustand der Magnetflussleiteinheit dem Aufnahmebereich zugewandt ist. Dadurch kann vorteilhaft ein Verschleiß der Magnetflussleitelemente reduziert werden, insbesondere da Ferrite i.d.R. relativ spröde Materialien sind. Vorteilhaft kann eine Beschädigung der Magnetflussleitelemente, z.B. bei einem Anstoßen an ein teilweise in der Induktionsheizeinheit aufgenommenes Werkzeug oder an eine teilweise in der Induktionsheizeinheit aufgenommene Werkzeugaufnahme verhindert werden.

Vorteilhaft kann ein besseres und vorzugsweise verschleißärmeres Gleiten der Magnetflussleitelemente aneinander, beispielsweise bei einem Verstellen der Relativpositionen der Magnetflussleitelemente zueinander, erreicht werden. Vorteilhaft kann dadurch, insbesondere bei hohen Beanspruchungen der Magnetflussleiteinheit, beispielsweise durch Dauerläufe der Induktionsheizeinheit, eine hohe Lebensdauer der Magnetflussleiteinheit erreicht werden. Vorteilhaft können durch eine Verhinderung von Beschädigungen oder Verschleiß der Magnetflussleitelemente gleichbleibende Magnetflussleiteigenschaften der Magnetflussleiteinheit erreicht werden. Vorteilhaft können Ausfallraten und/oder Servicekosten gering gehalten werden. Vorteilhaft kann eine Eignung der Induktionsheizeinheit für zumindest zu einem Großteil automatisierte Ein- und/oder Ausspannstationen, wie sie z.B. in der deutschen Patentanmeldung mit der Veröffentlichungsnummer DE 10 2019 115 607 A1 beschrieben ist, erreicht werden. Unter einem "Magnetfluss" soll insbesondere ein magnetischer Fluss, ein Magnetfeld und/oder eine magnetische Flussdichte verstanden werden.

Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, insbesondere ein Schrumpffutter, ausgebildet. Das Werkzeug ist insbesondere als ein Schaftwerkzeug, vorzugsweise als ein Rotations-Schaftwerkzeug, beispielsweise ein Bohrer, ein Fräser, ein Profilwerkzeug und/oder eine Reibahle ausgebildet. Unter einem "Einschrumpfen von Werkzeugen in und/oder aus Werkzeugaufnahmen" soll insbesondere ein Einspannen von Werkzeugen in Werkzeugaufnahmen verstanden werden, bei dem eine Werkzeugaufnahmeöffnung der Werkzeugaufnahme zunächst thermisch aufgeweitet wird, dann ein Werkzeug in die Werkzeugaufnahmeöffnung eingeführt wird und wobei das Werkzeug schließlich nach einem Abkühlen der Werkzeugaufnahme durch einen Kraftschluss, insbesondere einen Reibschluss, in der Werkzeugaufnahme befestigt ist. Unter einem "Ausschrumpfen von Werkzeugen in und/oder aus Werkzeugaufnahmen" soll insbesondere ein Lösen von mittels eines Kraftschlusses, insbesondere eines Reibschlusses, in Werkzeugaufnahmen befestigten Werkzeugen verstanden werden, bei dem die Werkzeugaufnahmeöffnung der Werkzeugaufnahme, insbesondere unter Vermeidung einer gleichzeitigen Erwärmung des Werkzeugs durch die Abschirmeinheit, thermisch soweit aufgeweitet wird, bis das in der Werkzeugaufnahme befestigte Werkzeug aus der Werkzeugaufnahme entnehmbar ist.

Unter "zumindest einem Teil der Werkzeugaufnahme" soll insbesondere zumindest ein die Werkzeugaufnahmeöffnung der Werkzeugaufnahme umfassender Bereich der Werkzeugaufnahme verstanden werden. Die Magnetflussleiteinheit ist insbesondere dazu vorgesehen, das Induktionsmagnetfeld der Induktionsspule zu leiten, vorzugsweise von dem ein- und/oder auszuschrumpfenden Werkzeug wegzuleiten, bevorzugt das Induktionsmagnetfeld von dem ein- und/oder auszuschrumpfenden Werkzeug abzuschirmen. Insbesondere bildet die Magnetflussleiteinheit einen vorgegebenen Pfad für den Magnetfluss des Induktionsmagnetfelds, insbesondere für das Induktionsmagnetfeld, aus. Insbesondere ist die Magnetflussleiteinheit dazu vorgesehen, eine Erwärmung des Werkzeugs bei dem Einschrumpfvorgang und/oder bei dem Ausschrumpfvorgang zumindest wesentlich zu verhindern. Insbesondere ist eine, insbesondere mittlere, Magnetfeldstärke des Induktionsmagnetfelds der Induktionsspule auf einer der Induktionsspule gegenüberliegenden Seite der Magnetflussleiteinheit um zumindest 80%, vorzugsweise um zumindest 90 % und bevorzugt um zumindest 99 % im Vergleich zu einer Anordnung ohne Magnetflussleiteinheit reduziert.

Insbesondere weist die Magnetflussleiteinheit eine Mehrzahl an Magnetflussleitelementen, vorzugsweise zumindest zwei Magnetflussleitelemente, vorteilhaft zumindest vier Magnetflussleitelemente, bevorzugt zumindest sechs Magnetflussleitelemente und besonders bevorzugt zumindest acht Magnetflussleitelemente, auf. Insbesondere sind die Magnetflussleitelemente der Magnetflussleiteinheit zumindest im Wesentlichen identisch zueinander ausgebildet. Unter "zumindest im Wesentlichen identisch" soll insbesondere abgesehen von Produktionstoleranzen identisch verstanden werden. Alternativ kann jedoch auch zumindest ein Magnetflussleitelement oder mehrere Magnetflussleitelemente unterschiedlich von zumindest einem weiteren Magnetflussleitelement ausgebildet sein. Das Magnetflussleitelement ist insbesondere zumindest teilweise aus einem Material ausgebildet, welches magnetisch leitend und elektrisch schlecht- oder nichtleitend ist. Insbesondere weist zumindest ein Teil des Magnetflussleitelements eine hohe magnetische Permeabilität auf. Vorzugsweise beträgt eine relative magnetische Permeabilitätszahl des Magnetflussleitelements, insbesondere des magnetisch leitenden Teils des Magnetflussleitelements, zumindest 100, vorteilhaft zumindest 500, bevorzugt zumindest 1000 und besonders bevorzugt zumindest 2000. Insbesondere ist das Magnetflussleitelement zumindest teilweise aus einem ferrimagnetischen Werkstoff ausgebildet. Insbesondere ist das Magnetflussleitelement zumindest teilweise aus einer ferrimagnetischen Oxidkeramik ausgebildet. Insbesondere ist das Magnetflussleitelement zumindest teilweise aus einer weichmagnetischen ferrimagnetischen Oxidkeramik ausgebildet. Beispielsweise umfasst das Magnetflussleitelement ein NiZn-Ferrit oder ein MnZn-Ferrit. Insbesondere ist denkbar, dass ein dem Aufnahmebereich zugewandter Teil des Magnetflussleitelements aus der ferrimagnetischen Oxidkeramik und ein von dem Aufnahmebereich abgewandter Teil des Magnetflussleitelements aus einem von der ferrimagnetischen Oxidkeramik verschiedenen Werkstoff, beispielsweise Kunststoff, ausgebildet ist. Dadurch kann vorteilhaft eine gute Magnetfeldleitung bei zugleich möglichst geringen Kosten erreicht werden.

Insbesondere ist das Magnetflussleitelement einstückig ausgebildet. Vorzugsweise ist das Magnetflussleitelement einteilig oder monolithisch ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Insbesondere sind die Magnetflussleitelemente zu einer Feldformung des Induktionsmagnetfelds der Induktionsspule vorgesehen. Vorzugsweise bilden die Magnetflussleitelemente Feldformerelemente aus. Vorzugsweise bildet die Magnetflussleiteinheit eine Feldformereinheit zu einer Formung des Induktionsmagnetfelds aus.

Insbesondere werden zur Herstellung der Magnetflussleitelemente zunächst Rohlinge der Magnetflussleitelemente aus einem Pulver gepresst, vorzugsweise bei Temperaturen über 1000°C gesintert. Anschließend werden die Rohlinge vorzugsweise als zusammenhängende Scheibe, die mehrere Magnetflussleitelemente, vorzugsweise alle Magnetflussleitelemente der Magnetflussleiteinheit, umfasst, gedreht. Dabei wird insbesondere auch eine Auswölbung auf der unteren Seite der Magnetflussleitelemete erzeugt. Anschließend wird die erzeugte Scheibe insbesondere mittels eines Erodierens oder eines anderen Trennungsverfahrens in Segmente aufgeteilt, welche dann die einzelnen Magnetflussleitelemente ausbilden. Alternativ werden die Magnetflussleitelemente aus einem Ferrit-Vollmaterial gefräst.

Unter einem "Aufnahmebereich der Induktionsheizeinheit" soll insbesondere eine zumindest im Wesentlichen gerade Öffnung innerhalb der Induktionsheizeinheit verstanden werden. Vorzugsweise verläuft zumindest ein Großteil des magnetischen Flusses, vorzugsweise der komplette magnetische Fluss, durch eine, insbesondere beliebige, Öffnungsebene des Aufnahmebereichs. Bevorzugt verlaufen zumindest im Wesentlichen alle Magnetfeldlinien des Induktionsmagnetfelds einmal durch den Aufnahmebereich der Induktionsheizeinheit. Insbesondere ist der Aufnahmebereich der Induktionsheizeinheit zumindest im Wesentlichen parallel zu einer Spulenachse der Induktionsspule der Induktionsheizeinheit ausgerichtet. Insbesondere ist der Aufnahmebereich zumindest im Wesentlichen parallel zu einer Längsachse und/oder einer Haupterstreckungsrichtung der in die Induktionsheizeinheit einsetzbaren Werkzeugaufnahmen und/oder Werkzeuge angeordnet. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt.

Insbesondere ist die Induktionsspule als eine Zylinderspule und/oder als ein Solenoid ausgebildet. Die Induktionsheizeinheit ist insbesondere dazu vorgesehen, ein Induktionsmagnetfeld, vorzugsweise ein, insbesondere hochfrequentes, magnetisches Wechselfeld zu erzeugen. Insbesondere wechselwirkt das Material der, vorzugsweise metallischen, Werkzeugaufnahme mit dem Induktionsmagnetfeld und erhitzt sich dadurch. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere weist die Induktionsheizvorrichtung eine Lagereinheit zu einer beweglichen Lagerung der Magnetflussleitelemente, vorzugsweise zu einer relativbeweglichen Lagerung der Magnetflussleitelemente zueinander, auf. Insbesondere ist die Lagereinheit dazu vorgesehen, die Magnetflussleitelemente derart relativ zueinander zu lagern, dass die Öffnung in einem Zentrum der Magnetflussleiteinheit durch die Bewegung der Magnetflussleitelemente zueinander variiert wird. Insbesondere sind die Magnetflussleitelemente irisartig zueinander bewegbar. Insbesondere ist die Öffnung irisartig verschließbar und/oder irisartig öffenbar. Insbesondere sind die Magnetflussleitelemente der Magnetflussleiteinheit benachbart zueinander in einer gemeinsamen Ebene, insbesondere Bewegungsebene, angeordnet. Unter "benachbart" soll insbesondere unmittelbar benachbart und/oder unmittelbar nebeneinander angeordnet verstanden werden. Insbesondere sind die Magnetflussleitelemente der Magnetflussleiteinheit in jedem Betriebszustand der Magnetflussleiteinheit eng aneinander liegend angeordnet. Dadurch kann vorteilhaft eine besonders effektive Magnetflussleitung erreicht werden. Insbesondere beträgt ein, insbesondere minimaler, Spalt zwischen unmittelbar benachbarten Magnetflussleitelementen weniger als 0,5 mm, vorzugsweise weniger als 0,25 mm und bevorzugt weniger als 0,1 mm, insbesondere in allen möglichen Betriebszuständen der Magnetflussleiteinheit. Besonders bevorzugt berühren sich benachbarte Magnetflussleitelemente in allen möglichen Betriebszuständen. Insbesondere berühren sich die benachbarten Magnetflussleitelemente in allen möglichen Betriebszuständen (ausschließlich) an Seitenkanten, vorzugsweise an Berührungskanten, welche vorzugsweise zumindest teilweise senkrecht zu der Bewegungsebene der Magnetflussleitelemente verlaufen. Insbesondere sind die Magnetflussleitelemente in jedem Betriebszustand der Magnetflussleiteinheit überlappungsfrei zueinander, insbesondere zumindest aus einer Richtung, die parallel zu einer Axialrichtung des Aufnahmebereichs der Induktionsheizeinheit verläuft gesehen, überlappungsfrei zueinander. Unter einem "Großteil" soll insbesondere 51 %, vorzugsweise 66 %, bevorzugt 80 % und besonders bevorzugt 95 % verstanden werden.

Das Hüllenelement umgibt das Magnetflussleitelement insbesondere zumindest teilweise und/oder zumindest abschnittsweise. Das Hüllenelement ist vorzugsweise über das Magnetflussleitelement gestülpt. Insbesondere ist das Hüllenelement positionsfest und/oder verrutschsicher zu dem Magnetflussleitelement an dem Magnetflussleitelement angeordnet. Insbesondere folgt das Hüllenelement allen Bewegungen des Magnetflussleitelements instantan. Insbesondere kann das Hüllenelement formschlüssig an dem Magnetflussleitelement angeordnet, beispielsweise durch einen Rastmechanismus mit dem Magnetflussleitelement verbunden, sein. Alternativ oder zusätzlich kann das Hüllenelement kraftschlüssig (z.B. durch ein Befestigungselement wie einen Bolzen oder eine Schraube, etc.) und/oder stoffschlüssig (z.B. angeklebt, etc.) an dem Magnetflussleitelement angeordnet, vorzugsweise mit dem Magnetflussleitelement verbunden, sein.

Insbesondere ist das Magnetflussleitelement mit einer seitlichen Fläche, insbesondere mit einer Fläche, welche zumindest im Wesentlichen parallel zu der Axialrichtung des Aufnahmebereichs verläuft, dem Aufnahmebereich des Magnetflussleitelements zugewandt. Vorzugsweise deckt das Hüllenelement das Magnetflussleitelement an allen dem Aufnahmebereich zugewandten Seiten ab. Insbesondere bedeckt das Hüllenelement das Magnetflussleitelement zumindest auf den Seiten, die in zumindest einem Betriebszustand einem ein- oder auszuschrumpfenden Werkzeug in dem Aufnahmebereich zugewandt sind. Insbesondere bedeckt das Hüllenelement zumindest alle möglichen Kontaktseiten, mit denen das Hüllenelement in einem regulären Betrieb der Induktionsheizeinheit mit einem Werkzeug und/oder mit einem weiteren Magnetflussleitelement der Magnetflussleiteinheit in Kontakt treten könnte.

Wenn das Hüllenelement zumindest zu einem Großteil aus einem metallischen Werkstoff, vorzugsweise aus einem Edelstahl, bevorzugt aus einem rostfreien Stahl, ausgebildet ist, können vorteilhaft gute magnetische Eigenschaften, insbesondere Magnetflussleiteigenschaften beibehalten werden. Vorteilhaft kann zudem eine hohe Beständigkeit gegen Stöße und Reibung erreicht werden. Insbesondere wenn das Hüllenelement aus einem Edelstahl ausgebildet ist, kann zudem vorteilhaft eine hohe Korrosionsbeständigkeit, insbesondere auch bei einem Kontakt mit korrosiv wirkenden oder korrosionsbeschleunigenden Flüssigkeiten, erreicht werden. Vorteilhaft führt eine Reibung an metallischen Werkstoffen, insbesondere an einem Edelstahl, nicht zu einem körnigen Abrieb, welcher sich in Zwischenräume setzen und dadurch zu Blockaden führen kann.

Ferner wird vorgeschlagen, dass ein erster Teilbereich des erfindungsgemäßen Hüllenelements zumindest eine, zumindest in einem Betriebszustand der Magnetflussleiteinheit dem Aufnahmebereich zugewandte Spitze des Magnetflussleitelements abdeckt. Dadurch kann vorteilhaft ein besonders empfindlicher Spitzenbereich des Magnetflussleitelements zuverlässig vor Verschleiß und/oder Beschädigung geschützt werden. Unter einer Spitze des Magnetflussleitelements soll insbesondere ein in einer Abschirmebene der Magnetflussleiteinheit und/oder in einer zu der Bewegungsebene der Magnetflussleitelemente parallelen Ebene spitz zulaufender Teil des Magnetflussleitelements verstanden werden. Insbesondere weist der spitz zulaufende Teil des Magnetflussleitelements in diesem Fall einen Öffnungswinkel von weniger als 60°, vorzugsweise weniger als 45° und bevorzugt weniger als 30° auf. Insbesondere deckt der erste Teilbereich des Hüllenelements damit zumindest einen Teil des Magnetflussleitelements ab, welcher bei einem Fehlen des Hüllenelements an das Werkzeug anstoßen könnte/würde und/oder auf dem Werkzeugfutter aufliegen könnte/würde.

Wenn der erste Teilbereich auf einer der Spitze des zugehörigen Magnetflussleitelements zugewandten Kontaktinnenseite eine abgerundete Kante aufweist, kann vorteilhaft eine besonders verschleiß- und/oder bruchsichere Formgebung zur sicheren Aufnahme des Magnetflussleitelements in dem Hüllenelement ermöglicht werden, welche insbesondere ohne eckig spitz zulaufende Kontaktbereiche auskommt. Zudem kann vorteilhaft besonders an Kontaktbereichen ein erhöhter Verschleißschutz gewährt werden. Vorzugsweise sind zumindest in der seitlichen Umfangsrichtung des Magnetflussleitelements (d.h. in der parallel zu der Bewegungsebene der Magnetflussleitelemente verlaufenden Umfangsrichtung des Magnetflussleitelements) alle Innenkanten des Hüllenelements, welche in Kontakt mit dem Magnetflussleitelement kommen, abgerundet, so dass insbesondere auch alle Kontaktaußenkanten des Magnetflussleitelements abgerundet werden können.

Des Weiteren wird vorgeschlagen, dass ein zweiter Teilbereich des erfindungsgemäßen Hüllenelements zumindest eine, zumindest in einem Betriebszustand der Magnetflussleiteinheit dem Aufnahmebereich zugewandte Seitenfläche des Magnetflussleitelements abdeckt. Dadurch kann vorteilhaft auch an den

Seitenflächen des Magnetflussleitelements, insbesondere an den langen Seitenkanten des Magnetflussleitelements, ein erhöhter Verschleißschutz gewährt werden. Insbesondere deckt der zweite Teilbereich des Hüllenelements damit zumindest einen weiteren Teil des Magnetflussleitelements ab, welcher bei einem Fehlen des Hüllenelements an das Werkzeug anstoßen könnte/würde und/oder auf dem Werkzeugfutter aufliegen könnte/würde.

Weiterhin wird vorgeschlagen, dass ein dritter Teilbereich des erfindungsgemäßen Hüllenelements zumindest eine, insbesondere von der dem Aufnahmebereich in zumindest einem Betriebszustand zugewandten Seitenfläche des Magnetflussleitelements verschiedene, weitere Seitenfläche des Magnetflussleitelements, vorzugsweise alle Seitenflächen des Magnetflussleitelements, zumindest teilweise abdeckt. Dadurch kann vorteilhaft ein besonders umfassender Verschleißschutz erreicht werden. Insbesondere liegt der dritte Teilbereich des Hüllenelements an einem weiteren Hüllenelement eines benachbarten Magnetflussleitelements an, so dass insbesondere durch die Bedeckung des dritten Teilbereichs vorteilhaft ein Verschleiß durch eine Reibung der Magnetflussleitelemente der Magnetflussleiteinheit aneinander, wesentlich reduziert werden kann. Bei einer Reibung zwischen Magnetflussleiteinheiten kann ein körniger Abrieb erzeugt werden, welcher sich in der Lagereinheit oder zwischen Gleitflächen der Induktionsheizeinheit setzen kann und somit zu einer Blockade der Bewegung der Magnetflussleiteinheiten führen kann. Dies kann durch das vorgeschlagene Hüllenelement vorteilhaft verhindert werden.

Zusätzlich wird vorgeschlagen, dass eine, insbesondere mittlere, Wandstärke des ersten Teilbereichs des erfindungsgemäßen Hüllenelements und/oder eine, insbesondere mittlere, Wandstärke des zweiten Teilbereichs des Hüllenelements wesentlich größer ist als eine, insbesondere mittlere, Wandstärke des dritten Teilbereichs des Hüllenelements. Dadurch kann vorteilhaft eine besonders große Stoßsicherheit des mit der Hülle versehenen Magnetflussleitelements bei einem gleichzeitigen Aufrechterhalten von möglichst guten Magnetflussleiteigenschaften erreicht werden. Vorteilhaft kann zudem eine Auflagesituation der Auflage des Magnetflussleitelements auf einer Oberseite der in dem Aufnahmebereich angeordneten Werkzeugaufnahme verbessert werden, insbesondere indem das wesentlich verschleißärmere (weniger spröde und damit weniger zu Abplatzungen neigende) Hüllenelement zumindest einen Großteil einer Auflagefläche ausbildet. Insbesondere bildet eine senkrecht zu der Axialrichtung des Aufnahmebereichs verlaufende Unterseite des ersten Teilbereichs eine Auflagefläche zu einer Auflage auf die in dem Aufnahmebereich angeordnete Werkzeugaufnahme aus.

Wenn zudem das Magnetflussleitelement an zumindest einer Seitenkante einen verdickten Bereich aufweist und das Hüllenelement den verdickten Bereich, vorzugsweise vollständig, abdeckt, kann vorteilhaft ein besonders effektiver Verschleißschutz des Magnetflussleitelements erreicht werden. Der verdickte Bereich ist insbesondere dazu vorgesehen, einen Übergang der Magnetfeldlinien von der Werkzeugaufnahme in die Magnetflussleiteinheit oder umgekehrt zu optimieren. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Zudem wird vorgeschlagen, dass das Magnetflussleitelement auf einer Unterseite zumindest im Wesentlichen frei von einer Bedeckung durch das Hüllenelement ist. Dadurch kann vorteilhaft eine Kombination einer besonders guten Magnetflussleitung mit einem hohen Verschleißschutz erreicht werden. Insbesondere ist das Magnetflussleitelement zumindest in einem regulären Betriebszustand auf einer einem Spuleninneren der Induktionsspule zugewandten Seite zumindest im Wesentlichen frei von einer Bedeckung durch das Hüllenelement. Insbesondere ist das Magnetflussleitelement zumindest in einem regulären Betriebszustand auf einer der in dem Aufnahmebereich angeordneten Werkzeugaufnahme zugewandten Seite zumindest im Wesentlichen frei von einer Bedeckung durch das Hüllenelement. Insbesondere ist die Unterseite des Magnetflussleitelements in einem montierten Zustand der Induktionsheizvorrichtung dem Spuleninneren der Induktionsspule zugewandt. Insbesondere ist die Unterseite des Magnetflussleitelements in einem montierten Zustand der Induktionsheizvorrichtung dem Aufnahmebereich der Induktionsheizeinheit, insbesondere einer in der Induktionsheizeinheit ordnungsgemäß positionierten Werkzeugaufnahme, zugewandt. Unter "zumindest in Wesentlichen frei" soll insbesondere zumindest zu einem Großteil frei verstanden werden.

Außerdem wird vorgeschlagen, dass das Magnetflussleitelement auf einer Oberseite zumindest zu einem Großteil, vorzugsweise vollständig, durch das Hüllenelement bedeckt ist. Dadurch kann vorteilhaft eine hohe Verschleißbeständigkeit erreicht werden, vorzugsweise ohne dass die Magnetflussleiteigenschaften der Magnetflussleiteinheit wesentlich beeinträchtigt werden. Insbesondere ist die Oberseite des Magnetflussleitelements (ohne das Hüllenelement) an Führungsflächen der Lagereinheit zur Führung der Bewegung der Magnetflussleitelemente, insbesondere an einem Kunststoffring der Lagereinheit zur Führung der Bewegung der Magnetflussleitelemente, abgestützt. Diese Abstützung kann insbesondere zu Reibungseffekten führen. Vorteilhaft reduziert das Hüllenelement den durch diese Reibungseffekte erzeugten Verschleiß. Insbesondere ist die Oberseite des Magnetflussleitelements in einem montierten Zustand der Induktionsheizvorrichtung von dem Spuleninneren der Induktionsspule abgewandt. Insbesondere ist die Oberseite des Magnetflussleitelements in einem montierten Zustand der Induktionsheizvorrichtung von dem Aufnahmebereich der Induktionsheizeinheit, insbesondere von einer in der Induktionsheizeinheit ordnungsgemäß positionierten Werkzeugaufnahme, abgewandt.

Wenn das Hüllenelement eine rundum berandete Aufnahmewanne zu einer Aufnahme des Magnetflussleitelements ausbildet, kann vorteilhaft ein besonders guter Verschleißschutz für das Magnetflussleitelement unter gleichzeitiger Aufrechterhaltung von guten Magnetflussleiteigenschaften des Magnetflussleitelements erreicht werden. Vorteilhaft kann zudem eine einfache Montage und/oder Anordnung des Hüllenelements an das Magnetflussleitelement erreicht werden. Insbesondere sind die Wände der rundum berandeten Wanne auf unterschiedlichen Seiten unterschiedlich hoch.

Wenn dabei eine Form einer Innenseite der Aufnahmewanne an eine Außenform des Magnetflussleitelements angepasst ist, kann vorteilhaft ein besonders enger Sitz des Hüllenelements, eine besonders einfache und fehlerunanfällige Montage des Hüllenelements und eine besonders hohe Kompaktheit erreicht werden.

Des Weiteren weist die Magnetflussleiteinheit erfindungsgemäß eine Mehrzahl an Magnetflussleitelementen auf, welche jeweils mit separaten Hüllenelementen versehen sind. Dadurch kann vorteilhaft eine hohe Verschleißbeständigkeit der gesamten Magnetflussleiteinheit erreicht werden.

Wenn der dritte Teilbereich des Hüllenelements erfindungsgemäß zumindest während eines Betriebszustands der Magnetflussleiteinheit, vorzugsweise während allen regulären Betriebszuständen der Magnetflussleiteinheit, an einem, ein weiteres Magnetflussleitelement der Magnetflussleiteinheit abdeckenden weiteren Hüllenelement berührend anliegt, kann vorteilhaft eine besonders lückenlose Ausbildung der Magnetflussleiteinheit erreicht werden, wodurch vorteilhaft besonders gute Magnetflussleiteigenschaften erreicht werden können.

Ferner wird vorgeschlagen, dass die Induktionsheizvorrichtung ein Stiftelement aufweist, welches dazu vorgesehen ist, das Hüllenelement und das Magnetflussleitelement miteinander zu verbinden. Dadurch kann eine vorteilhafte und/oder einfache Befestigung des Hüllenelements an dem Magnetflussleitelement erreicht werden. Die Stiftelemente durchdringen insbesondere das Magnetflussleitelement und das Hüllenelement vollständig. Insbesondere weist die Induktionsheizvorrichtung zumindest ein weiteres Stiftelement, vorzugsweise eine Mehrzahl an weiteren Stiftelementen, auf, welche ebenfalls dazu vorgesehen sind, das Magnetflussleitelement und das Hüllenelement vollständig zu durchdringen. Dadurch kann vorteilhaft ein Wackeln des Magnetflussleitelements in dem Hüllenelement verhindert werden.

Insbesondere sind die Stiftelemente mit einer Presspassung oder mit einer Übergangspassung in Ausnehmungen der Magnetflussleitelemente und der Hüllenelemente eingepasst. Alternativ sind auch Spielpassungen denkbar, wobei dann oben und unten auf die Stiftelemente jeweils ein die Verbindung sicherndes Abschlusselement aufgebracht werden muss.

Wenn das das Hüllenelement und das Magnetflussleitelement verbindende Stiftelement zumindest auf einer Oberseite des Hüllenelements über das Hüllenelement hervorsteht und mit einem um das Stiftelement umlaufenden Kugellager verbunden, insbesondere verpresst, ist und/oder, wenn das das Hüllenelement und das Magnetflussleitelement verbindende Stiftelement auf einer Unterseite des Magnetflussleitelements über das Magnetflussleitelement hervorsteht und mit einem um das Stiftelement umlaufenden Kugellager verbunden, insbesondere verpresst, ist, kann eine vorteilhafte Führung des Magnetflussleitelements in der Lagereinheit der Magnetflussleiteinheit erreicht werden. Insbesondere kann das Stiftelement als Führungselement einer Translationsachse der Lagereinheit oder in Kombination mit dem Kugellager als Führungselement einer (translatierbaren) Rotationsachse der Lagereinheit verwendet werden.

Ferner wird das Hüllenelement für die Induktionsheizvorrichtung und/oder ein Verfahren zu einem Verschleißschutz des Magnetflussleitelements durch das Hüllenelement vorgeschlagen. Dadurch kann vorteilhaft ein guter Verschleißschutz erreicht werden.

Die erfindungsgemäße Induktionsheizvorrichtung, das erfindungsgemäße Hüllenelement und/oder das erfindungsgemäße Verfahren sollen hierbei nicht auf die oben beschriebene Anwendung und Ausführungsform beschränkt sein. Insbesondere kann die erfindungsgemäße Induktionsheizvorrichtung, das erfindungsgemäße Hüllenelement und/oder das erfindungsgemäße Verfahren zu einer Erfüllung einer hierin beschriebenen Funktionsweise eine von einer hierin genannten Anzahl von einzelnen Elementen, Bauteilen, Verfahrensschritten und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Ansicht einer Ein- und/oder Ausschrumpfspannstation mit einer eine Magnetflussleiteinheit aufweisenden Induktionsheizvorrichtung,
- Fig. 2: eine schematische Unteransicht der mehrere Magnetflussleitelemente aufweisenden Magnetflussleiteinheit, wobei die Magnetflussleitelemente jeweils mit Hüllenelementen versehenen sind,
- Fig. 3: eine schematische Explosionsdarstellung eines Magnetflussleitelements mit zugehörigem Hüllenelement,
- Fig. 4: eine schematische perspektivische Obenansicht des Magnetflussleitelements mit montiertem Hüllenelement,
- Fig. 5: eine schematische perspektivische Unteransicht des Magnetflussleitelements mit dem montierten Hüllenelement,
- Fig. 6: eine schematische perspektivische Unteransicht des Hüllenelements ohne Magnetflussleitelement,
- Fig. 7: eine schematische Draufsicht auf eine Unterseite des Hüllenelements ohne Magnetflussleitelement,
- Fig. 8: eine schematische perspektivische Unteransicht des Magnetflussleitelements ohne Hüllenelement,
- Fig. 9: eine schematische perspektivische Obenansicht des Magnetflussleitelements ohne Hüllenelement und
- Fig. 10: ein schematisches Ablaufdiagramm eines Verfahrens zu einem Verschleißschutz des Magnetflussleitelements durch das Hüllenelement.

### Beschreibung des Ausführungsbeispiels

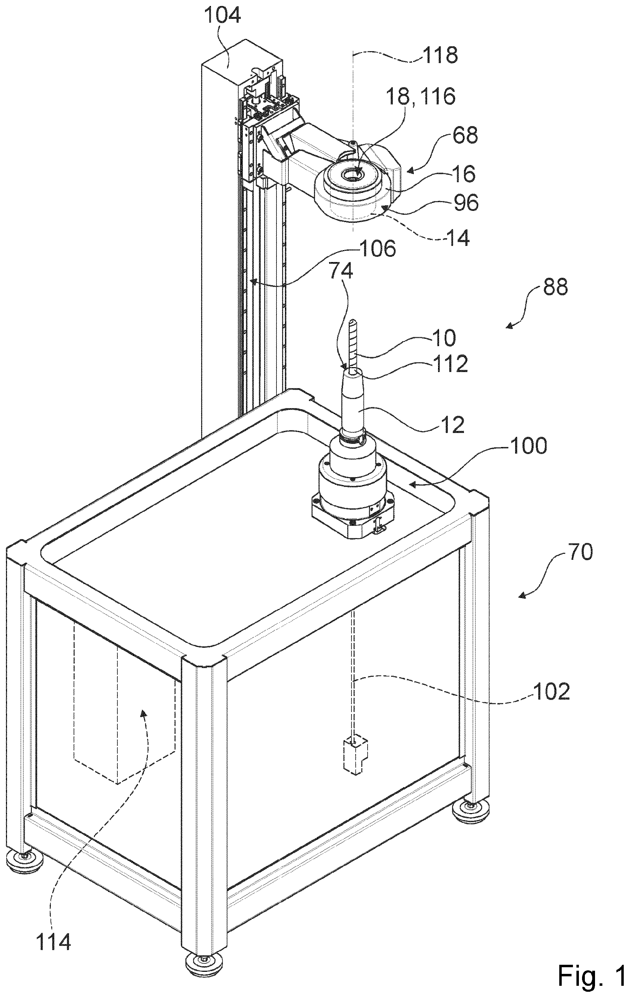

Die Fig. 1 zeigt eine Ein- und/oder Ausschrumpfspannstation 88. Die Ein- und/oder Ausschrumpfspannstation 88 ist für ein Einschrumpfen und für ein Ausschrumpfen von Werkzeugen 10 in und aus Werkzeugaufnahmen 12 vorgesehen. Die Ein- und/oder Ausschrumpfspannstation 88 ist als eine Schrumpfspannstation ausgebildet. Die Ein- und/oder Ausschrumpfspannstation 88 kann Teil eines Einstell- und/oder Messgeräts für Werkzeuge 10 und/oder Teil einer Multispann- und Mess- und/oder Einstellstation, wie sie beispielsweise in einer deutschen Patentanmeldung mit der Veröffentlichungsnummer DE 10 2019 115 607 A1 beschrieben ist, sein.

Die Ein- und/oder Ausschrumpfspannstation 88 umfasst ein Basisgestell 70 an, in oder auf welchem die funktionalen Einheiten der Ein- und/oder Ausschrumpfspannstation 88 montiert sind. Die Ein- und/oder Ausschrumpfspannstation 88 umfasst eine Haltevorrichtung 100 für Werkzeugaufnahmen 12. Die Haltevorrichtung 100 umfasst einen Längeneinstellpin 102 zu einer Voreinstellung einer Einstecktiefe für ein Werkzeug 10 in der Werkzeugaufnahme 12. Der Längeneinstellpin 102 ist dazu vorgesehen, von unten in die Werkzeugaufnahme 12 eingeschoben zu werden und so einen Anschlag für ein Werkzeug 10 auszubilden, welches in einem Schrumpfspannvorgang in die Werkzeugaufnahme 12 eingeführt wird. Alternativ oder zusätzlich kann der Längeneinstellpin 102 in einem Ausspannvorgang dazu vorgesehen sein, von unten einen Druck auf ein Werkzeug 10 in der Werkzeugaufnahme 12 auszuüben, welcher das Werkzeug 10 aus der Werkzeugaufnahme 12 herausdrückt, sobald die Werkzeugaufnahme 12 weit genug thermisch aufgeweitet ist.

In der in Fig. 1 gezeigten Haltevorrichtung 100 ist die als Schrumpfspannfutter ausgebildete Werkzeugaufnahme 12 positioniert. In der in der Fig. 1 beispielhaft gezeigten Werkzeugaufnahme 12 ist ein beispielhaftes Werkzeug 10 fixiert. Das dargestellte Werkzeug 10 ist als ein Schaftwerkzeug, insbesondere als ein Schaftbohrer, ausgebildet. Das dargestellte Werkzeug 10 weist einen Werkzeugschaft 112 auf. Alternativ könnte das Werkzeug 10 auch als ein von einem Schaftbohrer verschiedenes Schaftwerkzeug ausgebildet sein. Das Werkzeug 10 ist dazu vorgesehen, in der Werkzeugaufnahme 12 befestigt, insbesondere thermisch eingespannt, zu werden. Die Werkzeugaufnahme 12 und das in der Werkzeugaufnahme 12 eingespannte Werkzeug 10 bilden eine montierte Werkzeugeinheit aus.

Die Ein- und/oder Ausschrumpfspannstation 88 umfasst eine Induktionsheizvorrichtung 68. Die Ein- und/oder Ausschrumpfspannstation 88 umfasst einen Turm 104. Der Turm 104 umfasst Lagerschienen 106. Die Induktionsheizvorrichtung 68 ist linear entlang der Lagerschienen 106 auf und ab bewegbar. Die Induktionsheizvorrichtung 68 ist entlang der Lagerschienen 106 auf die Haltevorrichtung 100 zu bewegbar. Die Ein- und/oder Ausschrumpfspannstation 88 weist eine motorisch angetriebene Verstelleinheit 96 auf. Die eine motorisch angetriebene Verstelleinheit 96 ist zu einer Einstellung interner Bauteile der Induktionsheizvorrichtung 68, beispielsweise von Magnetflussleitelementen 22, 56 einer Magnetflussleiteinheit 20 der Induktionsheizvorrichtung 68 vorgesehen. Die Ein- und/oder Ausschrumpfspannstation 88 umfasst eine Steuer- und/oder Regeleinheit 114. Die Steuer- und/oder Regeleinheit 114 ist zu einer Steuerung der motorisch angetriebenen Verstelleinheit 96 vorgesehen.

Die Induktionsheizvorrichtung 68 ist zu einem Ausschrumpfen der Werkzeuge 10 aus den Werkzeugaufnahmen 12 vorgesehen. Alternativ oder zusätzlich ist die Induktionsheizvorrichtung 68 zu einem Einschrumpfen der Werkzeuge 10 in die Werkzeugaufnahmen 12 vorgesehen. Die Induktionsheizvorrichtung 68 weist eine Induktionsheizeinheit 16 auf. Die Induktionsheizeinheit 16 umfasst eine Induktionsspule 14. Die Induktionsspule 14 ist dazu vorgesehen, die Werkzeugaufnahme 12 thermisch aufzuweiten. Die Induktionsspule 14 ist dazu vorgesehen, über die Werkzeugaufnahme 12 und über das Werkzeug 10 gestülpt zu werden. Die Induktionsheizeinheit 16 bildet einen Aufnahmebereich 18 aus. Der Aufnahmebereich 18 der Induktionsheizeinheit 16 ist als eine zentrale, insbesondere vertikal ausgerichtete, vorzugsweise zumindest im Wesentlichen zylindrische oder konische, Öffnung 116 in der Induktionsheizeinheit 16 ausgebildet. Die Öffnung 116 des Aufnahmebereichs 18 erstreckt sich vollständig durch die Induktionsheizeinheit 16. Der Aufnahmebereich 18 verläuft parallel zu einer Spulenachse 118 der Induktionsspule 14. Die Induktionsheizeinheit 16, insbesondere ein Induktionsmagnetfeld der Induktionsspule 14, ist dazu vorgesehen, einen Teil einer in dem Aufnahmebereich 18 der Induktionsheizeinheit 16 angeordneten Werkzeugaufnahme 12 bei einem Ein- und/oder Ausschrumpfvorgang durch ein Erhitzen aufzuweiten.

Die Induktionsheizvorrichtung 68 weist die Magnetflussleiteinheit 20 auf. Die Magnetflussleiteinheit 20 ist zu einer Leitung des durch die Induktionsspule 14 erzeugten Magnetflusses, insbesondere der Magnetfeldlinien des durch die Induktionsspule 14 erzeugten Induktionsmagnetfelds, vorgesehen. Die Magnetflussleiteinheit 20 bildet dadurch eine Feldformereinheit zu einer Formung des durch die Induktionsspule 14 erzeugten Induktionsmagnetfelds aus. Die Magnetflussleiteinheit 20 ist in Richtung der Spulenachse 118 oberhalb der Induktionsspule 14 der Induktionsheizeinheit 16 angeordnet. Alternativ oder zusätzlich kann die Magnetflussleiteinheit 20 oder eine weitere Magnetflussleiteinheit (nicht gezeigt) unterhalb der Induktionsspule 14 der Induktionsheizeinheit 16 angeordnet sein. Die Magnetflussleiteinheit 20 bildet eine Abschirmeinheit zu einer Abschirmung des Induktionsmagnetfelds der Induktionsspule 14 von dem Werkzeug 10 aus.

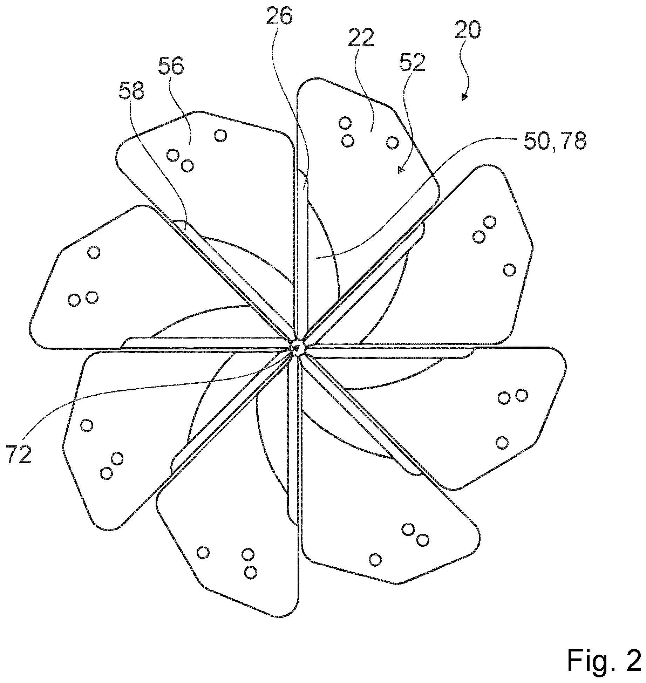

In der Fig. 2 ist die Magnetflussleiteinheit 20 schematisch dargestellt. Die Magnetflussleiteinheit 20 weist das Magnetflussleitelement 22 auf. Die Magnetflussleiteinheit 20 weist die weiteren Magnetflussleitelemente 56 auf. Die weiteren Magnetflussleitelemente 56 sind in der Magnetflussleiteinheit 20 benachbart zu dem Magnetflussleitelement 22 angeordnet. Insgesamt weist die in der Fig. 2 dargestellte Magnetflussleiteinheit 20 acht Magnetflussleitelemente 22, 56 auf. Von der Zahl acht abweichende Anzahlen von Magnetflussleitelementen 22, 56 sind jedoch ebenfalls denkbar. Die Magnetflussleitelemente 22, 56 sind relativ zueinander beweglich in der Induktionsheizeinheit 16 gelagert. Die Magnetflussleitelemente 22, 56 sind relativ zu dem Aufnahmebereich 18 beweglich gelagert.

Die Magnetflussleitelemente 22, 56 sind aus einer ferrimagnetischen Oxidkeramik ausgebildet. Die Magnetflussleitelemente 22, 56 sind aus einem Ferritwerkstoff ausgebildet. Die Magnetflussleitelemente 22, 56 bilden Abschirmelemente der Abschirmeinheit aus. Die Magnetflussleitelemente 22, 56 bilden Feldformerelemente der Feldformereinheit aus. Jedes Magnetflussleitelement 22, 56 der Magnetflussleiteinheit 20 bildet jeweils ein einzelnes Abschirmelement aus. Die Magnetflussleiteinheit 20 weist eine innere Öffnung 72 auf. Die innere Öffnung 72 der Magnetflussleiteinheit 20 ist in der Größe, insbesondere im Durchmesser, verstellbar. Die innere Öffnung 72 der Magnetflussleiteinheit 20 ist in der Größe, insbesondere im Durchmesser, stufenlos verstellbar. Die Magnetflussleitelemente 22, 56 sind dazu vorgesehen, die in der Größe verstellbare innere Öffnung 72 auszubilden. Die Magnetflussleitelemente 22, 56 sind dazu vorgesehen, durch Relativbewegungen zueinander die Größe der inneren Öffnung 72 festzulegen. Mittels der Magnetflussleitelemente 22, 56 ist die Größe und/oder eine Form der Öffnung 72 der Magnetflussleiteinheit 20 und/oder eine Größe und/oder eine Form der Öffnung 116 des Aufnahmebereichs 18 variierbar. Die Magnetflussleitelemente 22, 56 sind dazu vorgesehen, ein zumindest teilweise in dem Aufnahmebereich 18 der Induktionsheizeinheit 16 angeordnetes Werkzeug 10 oder eine zumindest teilweise in dem Aufnahmebereich 18 der Induktionsheizeinheit 16 angeordnete Werkzeugaufnahme 12 derart im Umfang zu umschließen, dass die Umschließung, insbesondere unabhängig von einer Größe des Umfangs des umschlossenen Werkzeugs 10 oder der umschlossenen Werkzeugaufnahme 12, zumindest im Wesentlichen lückenfrei ist. Jedes Magnetflussleitelement 22, 56 ist, insbesondere zumindest in Richtung der Spulenachse 118 gesehen, überlappungsfrei mit jeglichen weiteren Magnetflussleitelementen 22, 56 der Magnetflussleiteinheit 20. Benachbarte Magnetflussleitelemente 22, 56 der Magnetflussleiteinheit 20 liegen in allen möglichen einstellbaren Anordnungen eng aneinander an. Die Magnetflussleitelemente 22, 56 sind zueinander plan und/oder flächenbündig ausgerichtet. Die Werkzeugaufnahme 12 weist an einem oberen Ende einen Auslauf 74 (vgl. Fig. 1) auf. Der Auslauf 74 ist rund um eine Werkzeugaufnahmeöffnung der Werkzeugaufnahme 12 angeordnet. Die Magnetflussleitelemente 22, 56 können in einem Abschirmzustand plan auf dem Auslauf 74 (berührend) aufliegen. Die Magnetflussleitelemente 22, 56 können in einem Abschirmzustand an dem Werkzeugschaft 112 (berührend) anliegen.

Die Magnetflussleitelemente 22, 56 liegen in einer gemeinsamen Ebene, insbesondere in einer gemeinsamen Bewegungsebene. Jedes Magnetflussleitelement 22, 56 weist Abschirmflächen 76 auf. Die Abschirmflächen 76 bilden Oberseiten 54 oder Unterseiten 52 der Magnetflussleitelemente 22, 56. Die Abschirmflächen 76 der Magnetflussleitelemente 22, 56 verlaufen senkrecht zu der Spulenachse 118. Die Abschirmflächen 76 der Magnetflussleitelemente 22, 56 verlaufen parallel zu einer Radialrichtung des Aufnahmebereichs 18.

Jedes Magnetflussleitelement 22, 56 weist eine Form eines spitzwinkligen gleichschenkligen Dreiecks auf, bei dem eine einer Spitze 30 des gleichschenkligen Dreiecks gegenüberliegende Ecke gerade abgeschnitten ist. Alternativ ist denkbar, dass zumindest ein Magnetflussleitelement 22, 56 oder mehrere Magnetflussleitelemente 22, 56 eine von der Form eines anderen Magnetflussleitelements 22, 56 abweichende Form aufweist. Die Magnetflussleitelemente 22, 56 weisen (auf einer Unterseite 52) eine Auswölbung 78 auf. Die Auswölbung 78 ist jeweils an einem der Öffnung 72 zugewandten Endbereich der Magnetflussleitelemente 22, 56, insbesondere an der Spitze 30 der Magnetflussleitelemente 22, 56, angeordnet. Durch die Auswölbungen 78 kann vorteilhaft eine Auflagesituation oder eine Anlagesituation der Magnetflussleitelemente 22, 56 an/auf der Werkzeugaufnahme 12 oder an dem Werkzeug 10 optimiert werden. Durch die Auswölbungen 78 kann vorteilhaft eine Leitung des Induktionsmagnetfelds von der Magnetflussleiteinheit 20 zu der Werkzeugaufnahme 12 oder umgekehrt optimiert werden. Alternative Formen und Ausgestaltungen der Auswölbung 78 sowie ein Verzicht auf die Auswölbung 78 sind selbstverständlich denkbar.

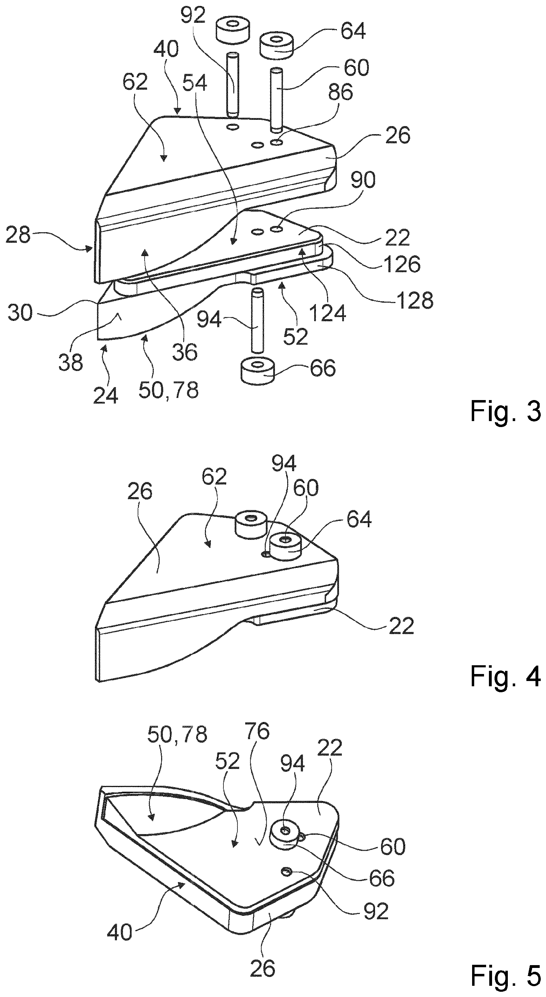

Die Induktionsheizvorrichtung 68 weist ein Hüllenelement 26, 58 auf. Das Hüllenelement 26, 58 ist an dem jeweils zugehörigen Magnetflussleitelement 22, 56 angeordnet. Jedes der Magnetflussleitelemente 22, 56 der Magnetflussleiteinheit 20 ist jeweils mit einem separaten Hüllenelement 26, 58 versehen. Die Fig. 3 zeigt eine schematische Explosionsdarstellung eines mit dem Hüllenelement 26 versehenen Magnetflussleitelements 22. In der Fig. 4 ist das Hüllenelement 26 an dem Magnetflussleitelement 22 angeordnet. Das Hüllenelement 26 ist über das Magnetflussleitelement 22 gestülpt. Die Induktionsheizvorrichtung 68 weist ein Stiftelement 60. Das Stiftelement 60 ist dazu vorgesehen, das Hüllenelement 26 und das Magnetflussleitelement 22 miteinander zu verbinden. Das Hüllenelement 26 weist ein Loch 86 auf. Das Magnetflussleitelement 22 weist ein Loch 90 auf. Das Stiftelement 60 ist vollständig durch das Loch 86 des Hüllenelements 26 geführt/gesteckt. Das Stiftelement 60 ist vollständig durch das Loch 90 des Magnetflussleitelements 22 geführt/gesteckt. Das das Hüllenelement 26 und das Magnetflussleitelement 22 verbindende Stiftelement 60 steht auf einer Oberseite 62 des Hüllenelements 26 über das Hüllenelement 26 hervor. Alternativ oder zusätzlich könnte das Stiftelement 60 auch auf der Unterseite 52 des Magnetflussleitelements 22 über das Magnetflussleitelement 22 hervorstehen. Die Induktionsheizvorrichtung 68 weist ein Kugellager 64 auf. Das Stiftelement 60 ist mit dem Kugellager 64, insbesondere mit einem Innenring des Kugellagers 64, verbunden. Das Kugellager 64, insbesondere ein Außenring des Kugellagers 64, läuft um das Stiftelement 60 um. Im alternativen oder zusätzlichen Fall, in dem das Stiftelement 60 über die Unterseite 52 des Magnetflussleitelements 22 hervorsteht, kann das Stiftelement 60 auf der Unterseite 52 mit einem ebenfalls um das Stiftelement 60 umlaufenden weiteren Kugellager 66 verbunden sein. Im beispielhaft dargestellten Fall weisen das Magnetflussleitelement 22 und das Hüllenelement 26 noch jeweils zwei weitere Löcher auf, durch die weitere Stiftelemente 92, 94 geführt/gesteckt sind, wobei zwei der Stiftelemente 60, 92 ein auf der Oberseite 62 des Hüllenelements 26 angeordnetes Kugellager 64 und ein Stiftelement 94 ein auf der Unterseite 52 des Magnetflussleitelements 22 angeordnetes weiteres Kugellager 66 aufweist. Dadurch kann vorteilhaft eine besonders gute und/oder leichtgängige Lagerung der zueinander beweglichen Magnetflussleitelemente 22, 56 erreicht werden.

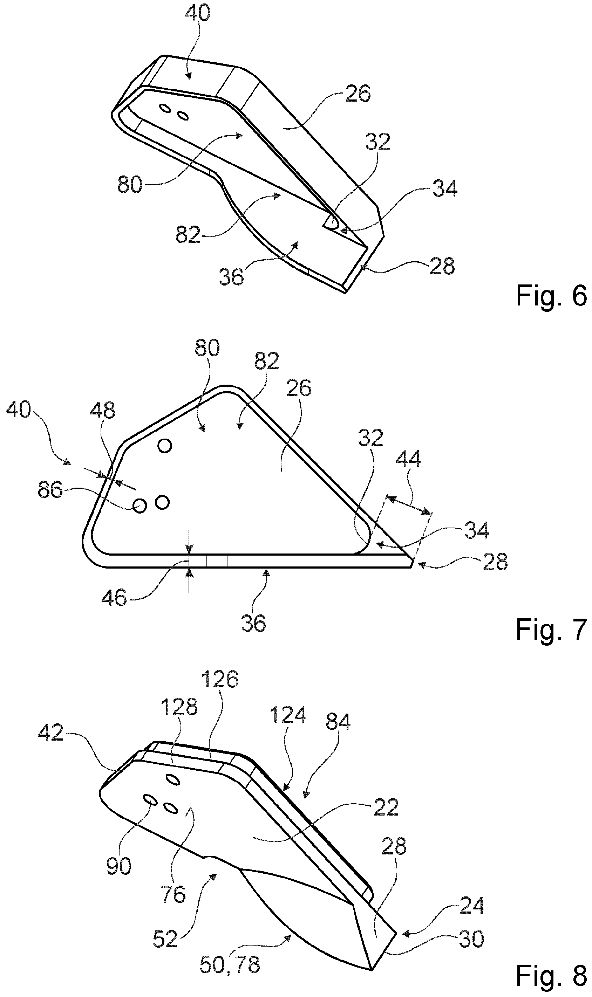

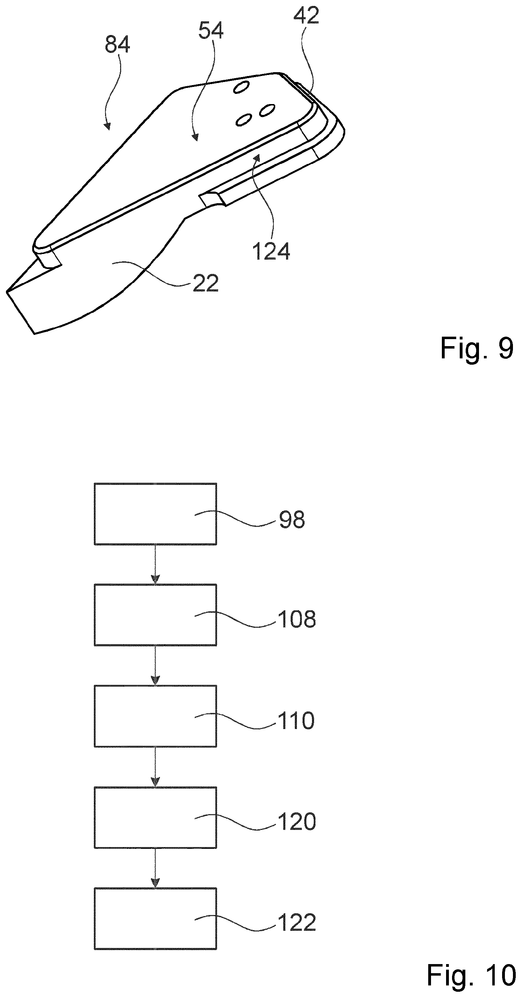

Das Hüllenelement 26 deckt das Magnetflussleitelement 22 auf zumindest einer Seite 24 des Magnetflussleitelements 22 ab, welche in zumindest einem Betriebszustand der Magnetflussleiteinheit 20 dem Aufnahmebereich 18 zugewandt ist. Das Hüllenelement 26 ist zumindest zu einem Großteil aus einem metallischen Werkstoff ausgebildet. Das Hüllenelement 26 ist aus einem Edelstahl ausgebildet. Ein erster Teilbereich 28 des Hüllenelements 26 deckt zumindest die Spitze 30 des Magnetflussleitelements 22 ab, welche in zumindest einem Betriebszustand der Magnetflussleiteinheit 20 dem Aufnahmebereich 18 zugewandt ist. Das Hüllenelement 26 bildet eine rundum berandete Aufnahmewanne 82 zu einer Aufnahme des Magnetflussleitelements 22 aus (vgl. auch Fig. 6). Eine Form einer Innenseite 80 der Aufnahmewanne 82 ist an eine Außenform 84 des Magnetflussleitelements 22 (siehe auch Figuren 8 oder 9) angepasst. Das Magnetflussleitelement 22 ist auf einer Unterseite 52 zumindest im Wesentlichen frei von einer Bedeckung durch das Hüllenelement 26 (siehe auch Fig. 4). Das Magnetflussleitelement 22 ist auf einer Oberseite 54 nahezu vollständig durch das Hüllenelement 26 bedeckt. Das Magnetflussleitelement 22 weist an zumindest einer Seitenkante einen verdickten Bereich 50 auf. Der verdickte Bereich 50 ist durch die Auswölbung 78 des Magnetflussleitelements 22 gebildet. Das Hüllenelement 26 deckt den verdickten Bereich 50 vollständig zu der Seite 24 hin ab (siehe auch Fig. 5).

Das Magnetflussleitelement 22 weist einen Kontaktteil 126 auf. Der Kontaktteil 126 des Magnetflussleitelements 22 ist zu einer Herstellung eines möglichst spielfreien Kontakts mit dem Hüllenelement 26 vorgesehen. Der Kontaktteil 126 bildet einen Kontaktkragen 124 aus (siehe Fig. 3). Der Kontaktkragen 124 ist in dem Zustand, in dem ein Hüllenelement 26 an dem Magnetflussleitelement 22 angeordnet ist, rundum in Umfangsrichtung von dem Hüllenelement 26 umgeben. Der Kontaktkragen 124 ist oberhalb der Abschirmfläche 76 des Magnetflussleitelements 22 angeordnet. Der Kontaktkragen 124 ist auf der Oberseite 54 des Magnetflussleitelements 22 angeordnet. Der Kontaktkragen 124 ist auf einer dem Hüllenelement 26, insbesondere auf einer Innenseite 80 des Hüllenelements 26, zugewandten Seite des Magnetflussleitelements 22 angeordnet. Das Magnetflussleitelement 22 weist einen Abschirmteil 128 auf. Der Abschirmteil 128 und der Kontaktteil 126 sind einstückig miteinander, insbesondere monolithisch, ausgebildet. Der Abschirmteil 128 und der Kontaktteil 126 sind etwa gleich dick. Der Abschirmteil 128 ist im ordnungsgemäßen Betrieb dem Aufnahmebereich 18 zugewandt. Aus einer Draufsicht auf die Oberseite 54 des Magnetflussleitelements 22 gesehen ragt der Abschirmteil 128 seitlich über den Kontaktteil 126 hinaus. Der Abschirmteil 128 bedeckt von der Unterseite 52 des Magnetflussleitelements 22 gesehen das Hüllenelement 26 nahezu vollständig. Lediglich an den dem Aufnahmebereich 18 zugewandten Seiten 24 bedeckt das Hüllenelement 26 eine Seite 24 des Magnetflussleitelements 22 vollständig. Ein überwiegender Teil, insbesondere ein Großteil, des Abschirmteils 128, vorzugsweise der gesamte Abschirmteil 128 mit Ausnahme der Seiten 24 die dem Aufnahmebereich 18 in zumindest einem Betriebszustand zugewandt sind, ist in Umfangsrichtung frei von einer Bedeckung durch das Hüllenelement 26.

Der Kontaktkragen 124 bildet einen Absatz aus. Der Absatz ist teilweise um das Magnetflussleitelement 22 umlaufend ausgebildet. Der Absatz ist lediglich an der Seite 24 des Magnetflussleitelements 22, die dem Aufnahmebereich 18 in zumindest einem Betriebszustand zugewandt ist, unterbrochen. Das Hüllenelement 26 sitzt im montierten Zustand auf dem durch den Kontaktkragen 124 gebildeten Absatz auf. Während der Kontaktteil 126 in Umfangsrichtung frei ist von spitzen Kanten, weist der Abschirmteil 128 an der Spitze 30 des Magnetflussleitelements 22 eine spitz zulaufende Kante auf. Dadurch kann vorteilhaft eine besonders gute Magnetflussleitung bei gleichzeitig geringem Verschleiß an Kontaktbereichen, an denen das Magnetflussleitelement 22 das Hüllenelement 26 berührt, erreicht werden.

Die Fig. 7 zeigt eine schematische Unteransicht des Hüllenelements 26. Der erste Teilbereich 28 des Hüllenelements 26 weist auf einer der Spitze 30 des zugehörigen Magnetflussleitelements 22 zugewandten Kontaktinnenseite 32 eine abgerundete Kante 34 auf. Die abgerundete Kante 34 kontaktiert nur den Kontaktteil 126 das Magnetflussleitelements 22. Unterhalb der abgerundeten Kante 34 überragt der spitz zulaufende Teil des Abschirmteils 128 des Magnetflussleitelements 22 die abgerundete Kante 34, insbesondere die die abgerundete Kante 34 ausbildende Seitenwand des Hüllenelements 26. Seitenflächen des Abschirmteils 128 des Magnetflussleitelements 22 sind, insbesondere abgesehen von der Seite 24 des Magnetflussleitelements 22, die dem Aufnahmebereich 18 in zumindest einem Betriebszustand zugewandt ist, etwa bündig mit Seitenflächen der Seitenwände des Hüllenelements 26 (siehe Fig. 5).

Das Hüllenelement 26 weist einen zweiten Teilbereich 36 auf. Der zweite Teilbereich 36 des Hüllenelements 26 deckt eine Seitenfläche 38 des Magnetflussleitelements 22 ab, welche in zumindest einem Betriebszustand der Magnetflussleiteinheit 20 dem Aufnahmebereich 18 zugewandt ist. Das Hüllenelement 26 weist einen dritten Teilbereich 40 auf. Der dritte Teilbereich 40 des Hüllenelements 22 deckt zumindest eine weitere Seitenfläche 42 des Hüllenelements 26 ab, welche verschieden ist von der durch den zweiten Teilbereich 36 des Hüllenelements 26 abgedeckten Seitenfläche 38 des Hüllenelements 26. Die durch den zweiten Teilbereich 36 abgedeckte Seitenfläche 38 ist verschieden zu der von dem dritten Teilbereich 40 abgedeckten weiteren Seitenfläche 42 ausgerichtet. Die von dem dritten Teilbereich 40 abgedeckte Seitenfläche 42 ist in allen Betriebszuständen der Magnetflussleiteinheit 20 von dem Aufnahmebereich 18 abgewandt. Der dritte Teilbereich 40 des Hüllenelements 26 liegt zumindest während eines Betriebszustands der Magnetflussleiteinheit 20 an dem, das weitere Magnetflussleitelement 56 der Magnetflussleiteinheit 20 abdeckenden weiteren Hüllenelement 58 berührend an. Der dritte Teilbereich 40 des Hüllenelements 26 gleitet zumindest während eines Betriebszustands der Magnetflussleiteinheit 20 an dem, das weitere Magnetflussleitelement 56 der Magnetflussleiteinheit 20 abdeckenden weiteren Hüllenelement 58.

Der erste Teilbereich 28 des Hüllenelements 26 weist eine Wandstärke 44 auf. Der zweite Teilbereich 36 des Hüllenelements 26 weist eine Wandstärke 46 auf. Der dritte Teilbereich 40 des Hüllenelements 26 weist eine Wandstärke 48 auf. Die Wandstärke 44 des ersten Teilbereichs 28 des Hüllenelements 26 ist wesentlich größer als die Wandstärke 48 des dritten Teilbereichs 40 des Hüllenelements 26. Die Wandstärke 46 des zweiten Teilbereichs 36 des Hüllenelements 26 ist wesentlich größer als die Wandstärke 48 des dritten Teilbereichs 40 des Hüllenelements 26. Die Wandstärke 44 des ersten Teilbereichs 28 des Hüllenelements 26 ist wesentlich größer als die Wandstärke 46 des zweiten Teilbereichs 36 des Hüllenelements 26.

Die Fig. 10 zeigt ein schematisches Ablaufdiagramm eines Verfahrens zu einem Verschleißschutz des Magnetflussleitelements 22 durch das Hüllenelement 26. In zumindest einem Verfahrensschritt 98 wird das Magnetflussleitelement 22 aus dem Ferritwerkstoff gefertigt und mit der u.a. in den Figuren 8 und 9 gezeigten Außenform 84 versehen. In zumindest einem weiteren Verfahrensschritt 108 wird das Hüllenelement 26 aus dem metallischen Werkstoff gefertigt, z.B. gebogen, tiefgezogen oder gefräst. In dem Verfahrensschritt 108 wird das Hüllenelement 26 mit einer an die Außenform 84 des Magnetflussleitelements 22 angepassten Form der Aufnahmewanne 82 versehen. In zumindest einem weiteren Verfahrensschritt 110 wird das Hüllenelement 26 über das Magnetflussleitelement 22 gestülpt. In dem Verfahrensschritt 110 wird das Hüllenelement 26 an dem Magnetflussleitelement 22 angeordnet. In dem Verfahrensschritt 110 wird das Hüllenelement 26 mittels der Stiftelemente 60, 92, 94 an dem Magnetflussleitelement 22 befestigt. In zumindest einem weiteren Verfahrensschritt 120 wird das mit dem Hüllenelement 26 versehene Magnetflussleitelement 22 mit weiteren Magnetflussleitelementen 56, die ebenfalls Hüllenelemente 58 aufweisen, zu der Magnetflussleiteinheit 20 zusammengeführt. In zumindest einem weiteren Verfahrensschritt 122 wird das Magnetflussleitelement 22 bei einem Verstellen der Magnetflussleitelemente 22, 56 zueinander durch das Hüllenelement 26 vor Reibung mit benachbarten Magnetflussleitelementen 56 geschützt. In dem Verfahrensschritt 122 wird das Magnetflussleitelement 22 durch das Hüllenelement 26 bei einem Verstellen der Magnetflussleitelemente 22, 56 in Richtung eines in dem Aufnahmebereich 18 angeordneten Werkzeugs 10 und/oder in Richtung einer in dem Aufnahmebereich 18 angeordneten Werkzeugaufnahme 12 vor einem Anschlagen und/oder Anstoßen an das Werkzeug 10 (z.B. an den Werkzeugschaft 112 des Werkzeugs 10) und/oder an die Werkzeugaufnahme 12 (z.B. an den Auslauf 74 der Werkzeugaufnahme 12) geschützt.

### Bezugszeichen

- 10: Werkzeug
- 12: Werkzeugaufnahme
- 14: Induktionsspule
- 16: Induktionsheizeinheit
- 18: Aufnahmebereich
- 20: Magnetflussleiteinheit
- 22: Magnetflussleitelement
- 24: Seite
- 26: Hüllenelement
- 28: Erster Teilbereich
- 30: Spitze
- 32: Kontaktinnenseite
- 34: Abgerundete Kante
- 36: Zweiter Teilbereich
- 38: Seitenfläche
- 40: Dritter Teilbereich
- 42: Weitere Seitenfläche
- 44: Wandstärke
- 46: Wandstärke
- 48: Wandstärke
- 50: Verdickter Bereich
- 52: Unterseite
- 54: Oberseite
- 56: Magnetflussleitelement
- 58: Hüllenelement
- 60: Stiftelement
- 62: Oberseite
- 64: Kugellager
- 66: Kugellager
- 68: Induktionsheizvorrichtung
- 70: Basisgestell
- 72: Öffnung
- 74: Auslauf
- 76: Abschirmfläche
- 78: Auswölbung
- 80: Innenseite
- 82: Aufnahmewanne
- 84: Außenform
- 86: Loch
- 88: Ein- und/oder Ausschrumpfspannstation
- 90: Loch
- 92: Stiftelement
- 94: Stiftelement
- 96: Verstelleinheit
- 98: Verfahrensschritt
- 100: Haltevorrichtung
- 102: Längeneinstellpin
- 104: Turm
- 106: Lagerschiene
- 108: Verfahrensschritt
- 110: Verfahrensschritt
- 112: Werkzeugschaft
- 114: Steuer- und/oder Regeleinheit
- 116: Öffnung
- 118: Spulenachse
- 120: Verfahrensschritt
- 122: Verfahrensschritt
- 124: Kontaktkragen
- 126: Kontaktteil
- 128: Abschirmteil

## Patentansprüche

1. Induktionsheizvorrichtung (68) für ein Ein- und/oder ein Ausschrumpfen von Werkzeugen (10) in und/oder aus einer Werkzeugaufnahme (12), mit einer, zumindest eine Induktionsspule (14) umfassenden Induktionsheizeinheit (16), welche dazu vorgesehen ist, zumindest einen Teil einer in einem Aufnahmebereich (18) der Induktionsheizeinheit (16) angeordneten Werkzeugaufnahme (12) bei einem Ein- und/oder Ausschrumpfvorgang durch ein Erhitzen aufzuweiten und mit zumindest einer Magnetflussleiteinheit (20) zur Leitung eines durch die Induktionsspule (14) erzeugten Magnetflusses, welche zumindest ein, vorzugsweise relativ zu dem Aufnahmebereich (18) beweglich gelagertes, und zumindest zu einem Großteil aus einem Ferritwerkstoff ausgebildetes Magnetflussleitelement (22) aufweist, und mittels welcher insbesondere eine Größe und/oder eine Form einer Öffnung (116) des Aufnahmebereichs (18) und/oder einer Öffnung (72) der Magnetflussleiteinheit (20) variierbar ist, wobei ein Hüllenelement (26), welches an dem Magnetflussleitelement (22) angeordnet ist und welches das Magnetflussleitelement (22) auf zumindest einer Seite (24) des Magnetflussleitelements (22) abdeckt, welche in zumindest einem Betriebszustand der Magnetflussleiteinheit (20) dem Aufnahmebereich (18) zugewandt ist, wobei ein erster Teilbereich (28) des Hüllenelements (26) zumindest eine, zumindest in einem Betriebszustand der Magnetflussleiteinheit (20) dem Aufnahmebereich (18) zugewandte Spitze (30) des Magnetflussleitelements (22) abdeckt,
**dadurch gekennzeichnet, dass** ein zweiter Teilbereich (36) des Hüllenelements (26) zumindest eine, zumindest in einem Betriebszustand der Magnetflussleiteinheit (20) dem Aufnahmebereich (18) zugewandte Seitenfläche (38) des Magnetflussleitelements (22) abdeckt, wobei ein dritter Teilbereich (40) des Hüllenelements (26) zumindest eine weitere Seitenfläche (42) des Magnetflussleitelements (22) zumindest teilweise abdeckt
und wobei
eine Wandstärke (44) des ersten Teilbereichs (28) des Hüllenelements (26) und/oder eine Wandstärke (46) des zweiten Teilbereichs (36) des Hüllenelements (26) wesentlich größer ist als eine Wandstärke (48) des dritten Teilbereichs (40) des Hüllenelements (26), und wobei
die Magnetflussleiteinheit (20) eine Mehrzahl an Magnetflussleitelementen (22, 56) aufweist, welche jeweils mit separaten Hüllenelementen (26, 58) versehen sind, wobei der dritte Teilbereich (40) des Hüllenelements (26) zumindest während eines Betriebszustands der Magnetflussleiteinheit (20) an einem, ein weiteres Magnetflussleitelement (56) der Magnetflussleiteinheit (20) abdeckenden weiteren Hüllenelement (58) berührend anliegt.

2. Induktionsheizvorrichtung (68) nach Anspruch 1, **dadurch gekennzeichnet, dass** das Hüllenelement (26) zumindest zu einem Großteil aus einem metallischen Werkstoff, vorzugsweise aus einem Edelstahl, ausgebildet ist.

3. Induktionsheizvorrichtung (68) nach Anspruch 1, **dadurch gekennzeichnet, dass** der erste Teilbereich (28) auf einer der Spitze (30) des zugehörigen Magnetflussleitelements (22) zugewandten Kontaktinnenseite (32) eine abgerundete Kante (34) aufweist.

4. Induktionsheizvorrichtung (68) nach einem der vorhergehenden Ansprüche, **dadurch gekennzeichnet, dass** das Magnetflussleitelement (22) an zumindest einer Seitenkante einen verdickten Bereich (50) aufweist und dass das Hüllenelement (26) den verdickten Bereich (50) abdeckt.

5. Induktionsheizvorrichtung (68) nach einem der vorhergehenden Ansprüche, **dadurch gekennzeichnet, dass** das Magnetflussleitelement (22) auf einer Unterseite (52) zumindest im Wesentlichen frei von einer Bedeckung durch das Hüllenelement (26) ist.

6. Induktionsheizvorrichtung (68) nach einem der vorhergehenden Ansprüche, **dadurch gekennzeichnet, dass** das Magnetflussleitelement (22) auf einer Oberseite (54) zumindest zu einem Großteil, vorzugsweise vollständig, durch das Hüllenelement (26) bedeckt ist.

7. Induktionsheizvorrichtung (68) nach einem der vorhergehenden Ansprüche, **dadurch gekennzeichnet, dass** das Hüllenelement (26) eine rundum berandete Aufnahmewanne (82) zu einer Aufnahme des Magnetflussleitelements (22) ausbildet.

8. Induktionsheizvorrichtung (68) nach Anspruch 7, **dadurch gekennzeichnet, dass** eine Form einer Innenseite (80) der Aufnahmewanne (82) an eine Außenform (84) des Magnetflussleitelements (22) angepasst ist.

9. Induktionsheizvorrichtung (68) nach einem der vorhergehenden Ansprüche, **gekennzeichnet durch** ein Stiftelement (60), welches dazu vorgesehen ist, das Hüllenelement (26) und das Magnetflussleitelement (22) miteinander zu verbinden.

10. Induktionsheizvorrichtung (68) nach Anspruch 9, **dadurch gekennzeichnet, dass** das das Hüllenelement (26) und das Magnetflussleitelement (22) verbindende Stiftelement (60) zumindest auf einer Oberseite (62) des Hüllenelements (26) über das Hüllenelement (26) hervorsteht und mit einem um das Stiftelement (60) umlaufenden Kugellager (64) verbunden, insbesondere verpresst, ist und/oder, dass das das Hüllenelement (26) und das Magnetflussleitelement (22) verbindende Stiftelement (60) auf einer Unterseite (52) des Magnetflussleitelements (22) über das Magnetflussleitelement (22) hervorsteht und mit einem um das Stiftelement (60) umlaufenden weiteren Kugellager (66) verbunden, insbesondere verpresst, ist.

11. Hüllenelement (26) für eine Induktionsheizvorrichtung (68) nach einem der vorhergehenden Ansprüche.

12. Verfahren zu einem Verschleißschutz eines Magnetflussleitelements (22) einer Induktionsheizvorrichtung (68) nach einem der Ansprüche 1 bis 10 durch das Hüllenelement (26), wobei in zumindest einem Verfahrensschritt (122) das Magnetflussleitelement (22) bei einem Verstellen der Magnetflussleitelemente (22, 56) zueinander durch das Hüllenelement (26) vor Reibung mit benachbarten Magnetflussleitelementen (56) geschützt wird und wobei in dem Verfahrensschritt (122) das Magnetflussleitelement (22) durch das Hüllenelement (26) bei dem Verstellen der Magnetflussleitelemente (22, 56) in Richtung eines in dem Aufnahmebereich (18) angeordneten Werkzeugs (10) und/oder in Richtung einer in dem Aufnahmebereich (18) angeordneten Werkzeugaufnahme (12) vor einem Anschlagen und/oder Anstoßen an das Werkzeug (10), z.B. an einen Werkzeugschaft (112) des Werkzeugs (10), und/oder an die Werkzeugaufnahme (12), z.B. an einen Auslauf (74) der Werkzeugaufnahme (12), geschützt wird.

## Claims

1. Induction heating device (68) for a shrink-clamping and/or unshrink-unclamping of tools (10) into and/or out of a tool holder (12),
with an induction heating unit (16) which comprises at least one induction coil (14) and is configured, during a shrink-clamping and/or unshrink-unclamping process, to thermally expand at least a portion of a tool holder (12) that is arranged in a receiving region (18) of the induction heating unit (16), and
with at least one magnetic flux conducting unit (20) for a conduction of a magnetic flux generated by the induction coil (14), comprising at least one magnetic flux conducting element (22), which is preferably supported movably relative to the receiving region (18) and is implemented at least to a large extent of a ferrite material,
and wherein in particular a size and/or a shape of an opening (116) of the receiving region (18) and/or of an opening (72) of the magnetic flux conducting unit (20) are/is variable by means of the at least one magnetic flux conducting unit (20),
wherein a sleeve element (26) is arranged on the magnetic flux conducting element (22) and covers the magnetic flux conducting element (22) on at least one side (24) of the magnetic flux conducting element (22) that faces towards the receiving region (18) in at least one operating state of the magnetic flux conducting unit (20),
wherein a first subregion (28) of the sleeve element (26) covers at least a tip (30) of the magnetic flux conducting element (22) that faces towards the receiving region (18) at least in an operating state of the magnetic flux conducting unit (20),
**characterized in that** a second subregion (36) of the sleeve element (26) covers at least one side surface (38) of the magnetic flux conducting element (22) which, at least in an operating state of the magnetic flux conducting unit (20), faces towards the receiving region (18), wherein a third subregion (40) of the sleeve element (26) covers at least one further side surface (42) of the magnetic flux conducting element (22) at least partially,
and wherein
a wall thickness (44) of the first subregion (28) of the sleeve element (26) and/or a wall thickness (46) of the second subregion (36) of the sleeve element (26) is substantially greater than a wall thickness (48) of the third subregion (40) of the sleeve element (26),
and wherein
the magnetic flux conducting unit (20) comprises a plurality of magnetic flux conducting elements (22, 56) which are respectively provided with separate sleeve elements (26, 58),
wherein at least during an operating state of the magnetic flux conducting unit (20), the third subregion (40) of the sleeve element (26) contacts and adjoins a further sleeve element (58), which covers a further magnetic flux conducting element (56) of the magnetic flux conducting unit (20).

2. Induction heating device (68) according to claim 1,
**characterized in that** the sleeve element (26) is implemented at least to a large extent of a metallic material, preferably of a stainless steel.

3. Induction heating device (68) according to claim 1,
**characterized in that** the first subregion (28) has a rounded edge (34) on an inner contact side (32) that faces toward the tip (30) of the corresponding magnetic flux conducting element (22).

4. Induction heating device (68) according to one of the preceding claims, **characterized in that** the magnetic flux conducting element (22) comprises a thickened region (50) on at least one side edge,
and that the sleeve element (26) covers the thickened region (50).

5. Induction heating device (68) according to one of the preceding claims, **characterized in that** the magnetic flux conducting element (22) is on an underside (52) at least substantially free of a covering by the sleeve element (26).

6. Induction heating device (68) according to one of the preceding claims, **characterized in that** the magnetic flux conducting element (22) is on an upper side (54) covered by the sleeve element (26) at least to a large extent, preferably completely.

7. Induction heating device (68) according to one of the preceding claims, **characterized in that** the sleeve element (26) forms a receiving tub (82) with an all-around rim for receiving the magnetic flux conducting element (22).

8. Induction heating device (68) according to claim 7,
**characterized in that** a shape of an inner side (80) of the receiving tub (82) is adapted to an outer shape (84) of the magnetic flux conducting element (22).

9. Induction heating device (68) according to one of the preceding claims, **characterized by** a pin element (60), which is configured to connect the sleeve element (26) and the magnetic flux conducting element (22) to each other.

10. Induction heating device (68) according to claim 9,
**characterized in that** the pin element (60) connecting the sleeve element (26) and the magnetic flux conducting element (22) protrudes beyond the sleeve element (26) at least on an upper side (62) of the sleeve element (26) and is connected, in particular pressed, with a ball bearing (64) that extends around the pin element (60),
**and/or that** the pin element (60) connecting the sleeve element (26) and the magnetic flux conducting element (22) protrudes beyond the magnetic flux conducting element (22) on an underside (52) of the magnetic flux conducting element (22) and is connected, in particular pressed, with a further ball bearing (66) that extends around the pin element (60).

11. Sleeve element (26) for an induction heating device (68) according to one of the preceding claims.

12. Method for a wear protection of a magnetic flux conducting element (22) of an induction heating device (68) according to one of claims 1 to 10 by means of the sleeve element (26),
wherein in at least one method step (122), during an adjustment of the magnetic flux conducting elements 22, 56 relative to each other, the magnetic flux conducting element (22) is protected from a friction with neighbouring magnetic flux conducting elements (56) by the sleeve element (26), and
wherein in the method step (122), during an adjustment of the magnetic flux conducting elements 22, 56 towards a tool (10) that is arranged in the receiving region (18) and/or towards a tool holder (12) that is arranged in the receiving region (18), the magnetic flux conducting element (22) is protected from an abutment and/or impact on the tool (10), for example on a tool shaft (112) of the tool (10), and/or on the tool holder (12), for example on a runout (74) of the tool holder (12), by the sleeve element (26).

## Revendications

1. Dispositif de chauffage par induction (68) pour un serrage et/ou desserrage par rétrécissement d'outils (10) dans et/ou hors d'un logement d'outil (12),
avec une unité de chauffage par induction (16) comprenant au moins une bobine d'induction (14) qui est prévue pour élargir par chauffage au moins une partie d'un logement d'outil (12) disposé dans une zone de logement (18) de l'unité de chauffage par induction (16) lors d'un procès de serrage et/ou desserrage par rétrécissement, et
avec au moins une unité de conduite de flux magnétique (20) pour guider un flux magnétique généré par la bobine d'induction (14), ayant au moins un élément de conduite de flux magnétique (22) qui est supporté de préférence de manière mobile par rapport à la zone de logement (18) et est réalisé au moins en grande partie d'un matériau ferritique, où moyennant ladite unité de conduite de flux magnétique (20) en particulier une taille et/ou une forme d'une ouverture (116) de la zone de logement (18) et/ou d'une ouverture (72) de l'unité de conduite de flux magnétique (20) peut être modifiée,
où un élément d'enveloppe (26) est disposé sur l'élément de conduite de flux magnétique (22) et recouvre l'élément de conduite de flux magnétique (22) sur au moins une face (24) de l'élément de conduite de flux magnétique (22) qui est tournée vers la zone de logement (18) dans au moins un état de fonctionnement de l'unité de conduite de flux magnétique (20), une première zone partielle (28) de l'élément d'enveloppe (26) recouvrant au moins une pointe (30) de l'élément de conduite de flux magnétique (22) qui est tournée vers la zone de logement (18) au moins dans un état de fonctionnement de l'unité de conduite de flux magnétique (20),
**caractérisé en ce qu'**une deuxième zone partielle (36) de l'élément d'enveloppe (26) recouvre au moins une surface latérale (38) de l'élément de conduite de flux magnétique (22), qui est tournée vers la zone de logement (18) au moins dans un état de fonctionnement de l'unité de conduite de flux magnétique (20), où une troisième zone partielle (40) de l'élément d'enveloppe (26) recouvre au moins partiellement au moins une autre surface latérale (42) de l'élément de conduite de flux magnétique (22)
et où
une épaisseur de paroi (44) de la première zone partielle (28) de l'élément d'enveloppe (26) et/ou une épaisseur de paroi (46) de la deuxième zone partielle (36) de l'élément d'enveloppe (26) est sensiblement plus grande qu'une épaisseur de paroi (48) de la troisième zone partielle (40) de l'élément d'enveloppe (26),
et où
l'unité de conduite de flux magnétique (20) comprend une pluralité d'éléments de conduite de flux magnétique (22, 56) qui sont respectivement pourvus d'éléments d'enveloppe séparés (26, 58), où la troisième zone partielle (40) de l'élément d'enveloppe (26) est en contact jouxtant avec un autre élément d'enveloppe (58) recouvrant un autre élément de conduite de flux magnétique (56) de l'unité de conduite de flux magnétique (20) au moins pendant un état de fonctionnement de l'unité de conduite de flux magnétique (20).

2. Dispositif de chauffage par induction (68) selon la revendication 1,
**caractérisé en ce que** l'élément d'enveloppe (26) est réalisé au moins en grande partie d'un matériau métallique, de préférence d'un acier inoxydable.

3. Dispositif de chauffage par induction (68) selon la revendication 1,
**caractérisé en ce que** la première zone partielle (28) présente un bord arrondi (34) sur une face de contact intérieure (32) tournée vers la pointe (30) de l'élément de conduite de flux magnétique associé (22).

4. Dispositif de chauffage par induction (68) selon l'une des revendications précédentes,
**caractérisé en ce que** l'élément de conduite de flux magnétique (22) présente une zone épaissie (50) sur au moins un bord latéral et que l'élément d'enveloppe (26) recouvre la zone épaissie (50).

5. Dispositif de chauffage par induction (68) selon l'une des revendications précédentes,
**caractérisé en ce que** l'élément de conduite de flux magnétique (22) est sur une face inférieure (52) au moins sensiblement exempt de recouvrement par l'élément d'enveloppe (26).

6. Dispositif de chauffage par induction (68) selon l'une des revendications précédentes,
**caractérisé en ce que** l'élément de conduite de flux magnétique (22) est sur une face supérieure (54) recouvert au moins en grande partie, de préférence complètement, par l'élément d'enveloppe (26).

7. Dispositif de chauffage par induction (68) selon l'une des revendications précédentes,
**caractérisé en ce que** l'élément d'enveloppe (26) forme une cuve de logement (82) bordé tout autour pour recevoir l'élément de conduite de flux magnétique (22).

8. Dispositif de chauffage par induction (68) selon la revendication 7,
**caractérisé en ce qu'**une forme d'une face intérieure (80) de la cuve de logement (82) est adaptée à une forme extérieure (84) de l'élément de conduite de flux magnétique (22).

9. Dispositif de chauffage par induction (68) selon l'une des revendications précédentes,
**caractérisé par** un élément de broche (60) prévu pour relier l'élément d'enveloppe (26) et l'élément de conduite de flux magnétique (22) l'un à l'autre.

10. Dispositif de chauffage par induction (68) selon la revendication 9,
**caractérisé en ce que** l'élément de broche (60) reliant l'élément d'enveloppe (26) et l'élément de conduite de flux magnétique (22) fait saillie au-delà de l'élément d'enveloppe (26) au moins sur une face supérieure (62) de l'élément d'enveloppe (26) et est relié, en particulier pressé, avec un roulement à billes (64) entourant l'élément de broche (60), **et/ou que** l'élément de broche (60) reliant l'élément d'enveloppe (26) et l'élément de conduite de flux magnétique (22) fait saillie au-delà de l'élément de conduite de flux magnétique (22) sur une face inférieure (52) de l'élément de conduite de flux magnétique (22) et est relié, en particulier pressé, avec un autre roulement à billes (66) entourant l'élément de broche (60).

11. Élément d'enveloppe (26) pour un dispositif de chauffage par induction (68) selon l'une des revendications précédentes.

12. Procédé pour une protection contre l'usure d'un élément de conduite de flux magnétique (22) d'un dispositif de chauffage par induction (68) selon l'une des revendications 1 à 10 moyennant l'élément d'enveloppe (26), où dans au moins une étape de procédé (122), l'élément de conduite de flux magnétique (22), lors d'un déplacement des éléments de conduite de flux magnétique (22, 56) l'un par rapport à l'autre, est protégé par l'élément d'enveloppe (26) contre un frottement avec des éléments de conduite de flux magnétique (56) voisins
et où dans l'étape de procédé (122), l'élément de conduite de flux magnétique (22) est protégé par l'élément d'enveloppe (26), lors du déplacement des éléments de conduite de flux magnétique (22, 56) vers un outil (10) disposé dans la zone de logement (18) et/ou vers un logement d'outil (12) disposé dans la zone de logement (18), contre un frappement et/ou un heurt contre l'outil (10), par exemple contre une queue d'outil (112) de l'outil (10), et/ou contre le logement d'outil (12), par exemple contre une sortie (74) du logement d'outil (12).
